(19) Europäisches Patentamt
European Patent Office
Office européen des brevets

(11) EP 3 177 016 A2

(12) EUROPEAN PATENT APPLICATION

(43) Date of publication:
07.06.2017 Bulletin 2017/23

(51) Int Cl.:
H04N 19/136 (2014.01)    H04N 19/53 (2014.01)
H04N 19/533 (2014.01)

(21) Application number: 16199016.3

(22) Date of filing: 16.11.2016

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 18.11.2015 EP 15306832

(71) Applicant: Thomson Licensing
92130 Issy-les-Moulineaux (FR)

(72) Inventor: HEPPER, Dietmar
30419 Hannover (DE)

(74) Representative: Amor, Rim
TECHNICOLOR
1-5, rue Jeanne d'Arc
92130 Issy-les-Moulineaux (FR)

(54) ENHANCED SEARCH STRATEGIES FOR HIERARCHICAL MOTION ESTIMATION

(57) There is provided a method for estimating motion between successive frames by estimating a first motion vector (v1) using a measurement window (mw) and search range in a first level of hierarchy, defining a second measurement window and search range for a second level of hierarchy, the second measurement window and search range being smaller than the first measurement window and search range, providing an energy dependent value for the second measurement window, comparing the energy dependent value with a threshold value and determining as resultant motion vector: a) either the sum of the first motion vector and a second motion vector estimated within the second measurement window, if the energy dependent value exceeds the threshold value or b) the first motion vector if the energy dependent value does not exceed the threshold value.

Fig. 1

**Description**

Technical field

The present invention relates to a hierarchical method for estimating motion between successive frames.
The present invention relates to a hierarchical method for estimating motion between successive frames by estimating a first motion vector using a first measurement window and a first search range in a first level of hierarchy which motion vector is updated and refined using a second measurement window and a second search range in a second level of hierarchy on the basis of the first motion vector, wherein the second measurement window is smaller than the first measurement window and the second search range is smaller than the first search range. The method may be continued until the last level of hierarchy using the smallest measurement window and smallest search range for updating and refining the motion vector. Furthermore, the present invention relates to a device for estimating motion.

Background

The present invention relates to a hierarchical method for estimating motion between successive frames by estimating a first motion vector using a first measurement window and a first search range in a first level of hierarchy which motion vector is updated and refined using a second measurement window and a second search range in a second level of hierarchy on the basis of the first motion vector, wherein the second measurement window is smaller than the first measurement window and the second search range is smaller than the first search range. The method may be continued until the last level of hierarchy using the smallest measurement window and smallest search range for updating and refining the motion vector. Furthermore, the present invention relates to a device for estimating motion.
Motion estimation is an essential tool for video compression, video pre- or postprocessing, for example. A video contains a sequence of images, here also called frames. A whole frame or at least part of it can be affected by motion.
There are various motion estimation methods around that are based on different motion models and technical approaches such as gradient methods, block matching, phase correlation, "optical flow" methods (often gradient-based) and feature point extraction and tracking. They all have advantages and drawbacks. Some provide accurate displacement vectors under certain conditions but fail in situations of a large amount of motion. Some may be successful in structured regions but fail in flat areas. Some may provide reliable vectors where the image has prominent features but are distracted by periodic structures etc. Often they have been investigated using a limited set of images or sequences with a certain spatial resolution rather than being ready for practical application in a business scenario covering a broad range of image sequence material and situations.
Orthogonal to and in combination with one of these approaches, hierarchical motion estimation allows a large vector search range and is typically combined with block matching. Hierarchical motion estimation is known from [1] and [2], for instance, and is further described in [3]. Such a hierarchical displacement estimator has been implemented and improved in its performance by a number of inventive methods as outlined in this invention. It has been developed both for full-frame motion estimation (delivering one vector per pixel) and point-of-interest tracking.
Motion estimation faces a number of different situations in image sequences, e.g. fast motion, different objects with different motion, objects moving in front of each other, flat regions, global motion (zoom, pan, etc.), periodic structures, objects entering or leaving the image area, small moving objects, moving shadows, etc. The ideal motion estimator would be capable of providing accurate and reliable motion vectors under all these challenging conditions. The hierarchical motion estimator has been investigated and improved with respect to some of these as far as possible.

Invention

It is the object of the present invention to provide a method for improved motion estimation specifically in situations of flat image regions.
According to the present invention this object is solved by a method according to claim 1 and a device according to claim 10. Further favourable developments are defined in the dependent claims.
According to one aspect, there is provided a method for estimating motion between successive frames by

- estimating a first motion vector by using a first measurement window and a first search range in a first level of hierarchy,
- using a second measurement window and a second search range in a second level of hierarchy for estimating an update or refinement of the first motion vector, the second measurement window being smaller than the first measurement window and/or the second search range being smaller than the first search range,
- providing an energy dependent value for the second measurement window,
- comparing the energy dependent value with a threshold value,
- determining as resultant motion vector:

o either the sum of the first motion vector and a second motion vector estimated by using the second measurement window, if the energy dependent value exceeds the threshold value,
∘ or the first motion vector, if the energy dependent value does not exceed the threshold value.

The method may be repeated in the same manner until the last and finest level of hierarchy is reached.
Furthermore, there is provided a device for estimating motion between successive frames including

- estimating means for estimating a first motion vector by using a first measurement window and a first search range in a first level of hierarchy, and for estimating an update or refinement of the first motion vector by using a second measurement window and a second search range for a second level of hierarchy, the second measurement window being smaller than the first measurement window and/or the second search range being smaller than the first search range,
- measurement means for providing an energy dependent value for the second measurement window and
- comparing means for comparing the energy dependent value with a threshold, wherein
- the calculating means is designed for determining as resultant motion vector:

o either the sum of the first motion vector and a second motion vector estimated by the estimating means using the second measurement window, if the energy dependent value exceeds the threshold,
∘ or the first motion vector, if the energy dependent value does not exceed the threshold.

The device may proceed in the same manner until the last and finest level of hierarchy is reached.
The advantage of the present invention is that in a first level of estimation a comparatively large measurement window and search range may be used. There is a high probability that this large measurement window contains high-frequency structure which guarantees a high quality and reliability of motion estimation. The motion estimation is refined in the second level of hierarchy, where the measurement window and search are smaller than the first measurement window and search range. If this smaller measurement window does no longer contain high-frequency structures, an energy value of this measurement window is smaller than a predefined threshold value. In this case the motion vector is not updated, but the first motion vector is maintained. Otherwise, if the energy value within the second measurement window is still high, i.e. high-frequency structure is present, a second motion vector is estimated using the second measurement window and the first motion vector is refined or updated with the second motion vector, since the motion estimation in the second measurement window is reliable. The same method may be followed until the last and finest level of the hierarchy.
The invention may help estimating the motion of fast or slowly moving objects in image sequences reliably and accurately. It may deal with situations of structured or flat regions as well as objects containing structure in only one dominant direction - which means ambiguity and therefore may typically mislead a motion estimator in the direction orthogonal to the high spatial frequencies. The invention may also help bringing the vector field closer to the shape of moving objects thus providing a better true motion vector field.
The basis of the invention is to perform hierarchical motion estimation which includes a number of levels of hierarchy. In each level, the image may be prefiltered, e.g. by means of a 2D mean value filter of a certain window size, the filtering strength being reduced from level to level, e.g. by reducing the window size. In each level e.g. a block matcher can be used to determine a motion vector for a marker position or a subset of pixels or every pixel of the whole frame in a certain regular grid. Within the measurement window, the image signal for the two frames compared can be subsampled as allowed according to the strength of the prefilter. A motion vector (update) may be computed, e.g. by log(D)-step search, optimizing a certain cost function, e.g. SAD (sum of absolute differences), SQD (sum of squared differences), etc. Motion estimation can e.g. be done with integer-pel resolution first, followed by sub-pel refinement (thus also reducing computational complexity). Several inventive methods are outlined that improve motion estimation performance of the basic hierarchical motion estimator.
In simple words the inventive idea is to update a vector obtained from a preceding level of the hierarchy only if the image signal in the measurement window now still contains structure. Otherwise it will be left unchanged thus preserving a reliable, though maybe not too accurate, motion estimate.
Similarly, also from the 2nd level of the hierarchy onwards, the energy of the image signal differences in the measurement window in horizontal, vertical or other directions may be determined. If the energy is low and in the range of the image signal noise in a certain direction (and large in the orthogonal one), the vector component will be frozen in this direction and left unchanged, while continuing hierarchical motion estimation only in the other direction of large(r) energy.
Additional enhanced neighbour search and refined integer-pel search may help bringing the vector field closer to the shape of moving objects.
The invention allows estimating motion and tracking certain image content or points of interest with improved reliability and accuracy. It especially allows to track fast motion in image sequences. It copes with situations of structured or flat regions as well as objects containing structure in a certain direction. It also helps getting the motion vector field closer to the shape of moving objects and therefore facilitates estimating true motion vectors.

Preferably the threshold value for comparing the energy dependent value is altered depending on the level of hierarchy. Thus, in each level the amount of structure considered as a reliable basis can be varied.

In a further development the method is performed separately for horizontal direction of motion and vertical direction of motion. This means that the motion vector may be updated in horizontal direction but not in vertical direction or vice versa.

In a further preferred embodiment the estimation of the first and/or the second motion vector is mainly performed in a predefined direction of the frames. This means that the search for the exact motion vector is performed within a band, the main dimension of which has a specific predefined direction.

Advantageously the estimation of the first and/or the second motion vector is performed by a log(D)-step search, where D is the sum of 1 plus the maximum displacement within the search range. Such log(D)-step search is well-known in the prior art, e.g. from [4], and helps reducing the computational costs of determining motion vectors.

In a specific embodiment the energy of the image signal differences in the respective measurement window in horizontal, vertical, diagonal or other direction may be determined as the energy dependent value, and if the energy in said direction is lower than the energy in the orthogonal direction by a first predefined value or lower than a second predefined value, the corresponding vector component of the first motion vector in said direction is left unchanged, while continuing motion estimation in another direction of larger energy.

According to a further favourable development the resultant motion vector is determined for a pixel, a first value of a cost function is calculated for the pixel by applying the resultant motion vector, a second value of the cost function is calculated for the pixel by applying a predetermined motion vector of a neighbour pixel and a final motion vector for the pixel is determined by assigning the resultant motion vector to the final motion vector if the first value of the cost function is smaller than the second value, and otherwise, when the first value of the cost function is higher than the second value, the motion vector of the neighbour pixel is assigned to the final motion vector of the pixel. For example, the cost function is based on the DFD (Displaced Frame Difference). It shows the difference between the estimated motion and the real motion. The vector of a neighbour pixel applied to the present pixel may lead to a better match, i.e. a smaller DFD or cost function value, than the motion vector estimated directly for the present pixel. Thus, a certain improvement could be obtained when considering the motion vector of a neighbour pixel.

The above defined method with two levels may be repeated for every successive level of hierarchy, where the number of levels of hierarchy is equal to or higher than three. This, however, means that the words "first level" and "second level" have to be understood in a relative way. For instance, the "first level" may signify the third absolute level in the hierarchy and the "second level" corresponds to the fourth absolute level of the specific hierarchy.

The method for estimating motion can be further refined in that in a lowest level of hierarchy the size of the measurement window is 5x5 or 7x7 and a vector grid size is the pixel grid size. This may bring the vector field closer to moving objects.

Additionally, in each level a prefiltering may be performed e.g. by a mean value filter, the normalised bandwidth of which is about $1/(2(w-1))$, and a factor of subsampling in the respective measurement window is chosen to be w-1, where w is the window size of the mean value filter in one dimension. These additional parameters may also help to improve the results of motion estimation.

The above features related to a method for estimating motion may also be regarded as functional features of the inventive device for estimating motion.

Drawings

Exemplary embodiments of the invention are illustrated in the drawings and are explained in more detail in the following description.

Fig. 1        an example of hierarchical displacement estimation between a present and a search frame;
Fig. 2        an example of displacement estimation by block matching using log(D)-step search;
Fig. 3        a displacement estimation at image boundary evaluating part of the measurement window;
Fig. 4a-4d    different search directions;
Fig. 5        an example of log(D)-step search with restriction of search positions depending on the direction of local structure;
Fig. 6        example of DFD and cost images for an HD sequence;
Fig. 7        horizontal and vertical displacement vector images for the HD sequence;
Fig. 8        horizontal and vertical displacement vector images of the HD sequence after 6 integer-pel levels of hierarchy;

Fig. 9       horizontal and vertical displacement vector images of the HD sequence with neighbour vector search;

Fig. 10      DFD images of the HD sequence with neighbour vector search in 3-by-3-neighbourhood and in 9-by-9-neighbourhood;

Fig. 11      motion-compensated images of a cut-out of the HD sequence showing the truck;

Fig. 12      horizontal and vertical displacement vector images of the HD sequence after 6 and 7 integer-pel levels of hierarchy;

Fig. 13      DFD images of the HD sequence after 6 and 7 integerpel levels of hierarchy; and

Fig. 14      motion compensated images of the HD sequence after 6 and 7 integer-pel levels of hierarchy.

Exemplary embodiments

The following examples are preferred embodiments of the present invention. The single features can be used in the described combinations but also in other combinations and as single parts.

*1. Introduction*

The following item 1 is an introduction to hierarchical motion estimation which forms the basis of the present invention being described in item 2 below in more detail.

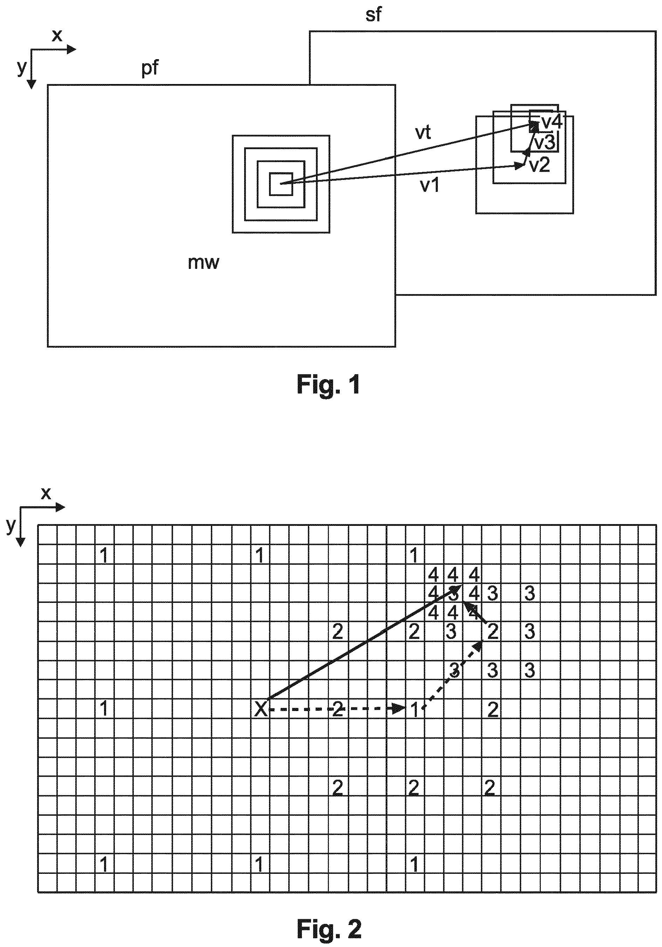

When standing on a mountain the look around shows us the scenery in a nice, but broad and coarse view, while when walking down the mountain our view gets narrower and we conceive more and more details and obtain an ever accurate image of the environment. A hierarchical motion estimator somehow follows this same concept: It has a number of hierarchical stages or levels in the first of which displacement estimation is performed on a strongly low-pass filtered, low-resolution image using a large vector search range and a large measurement window in which a cost function is computed - which has the advantage of yielding coarse but reliable initial motion vectors as a starting point for the next levels of the hierarchy. With every further level the low-pass filtering is less strong, so the image resolution gets higher, and the vector search range and measurement window size are decreased. In the last level there is just minor low-pass filtering and the search range typically is just $\pm 1$ pels and lines. The idea and advantage of this approach is to improve the accuracy of the motion vector from level to level, yielding at the end a motion vector that is both reliable and precise. An example of this approach is depicted in Fig. 1 for 4 levels of hierarchy.

Fig. 1 shows an example of hierarchical displacement estimation between a present frame pf and a search frame sf (past or future). The estimation is performed in four levels of hierarchy, wherein the size of the measurement window mw and the search range decrease from level to level. In the first level a motion vector v1 is obtained. In the second to fourth levels update motion vectors v2, v3 and v4 are obtained. In sum a total motion vector vt is obtained.

The less severe prefiltering from level to level is implemented by simply averaging the image signal over a square window of a size decreasing from level to level. As allowed by the resulting band limitation, a quasi-subsampling inside the measurement window is carried out thus reducing computational complexity, the subsampling factor being decreased from level to level correspondingly.

Due to the hierarchical approach the motion estimator is capable of tracking large amounts of motion in an image sequence. It is combined with a block matcher estimating (update) displacement vectors in every level, using a large to small measurement window with adapted subsampling in it. Both log(D)-step search and full search are supported, D being the maximum displacement +1. In case of full search, every candidate vector within the search range is tested meaning a high computational effort, while in case of log(D)-step search just a subset is tested but in several subsequent steps of reduced width as depicted in Fig. 2 for an example of 4-step search. In every step 9 candidate vectors are tested. The best vector is taken, and the next search step is carried out around it with half the previous search range or "step size", and so on until a search range of $\pm 1$ (see Table 1).

Fig. 2 shows an example of displacement estimation within one level of hierarchy by block matching using log(D)-step search with four steps and the step sizes 8, 4, 2 and 1 pels or lines. "x" represents a present pixel in a search frame (according to displacement vector resulting from previous level of hierarchy). "1" represents search positions (test vectors) in a first step, "2" represents search positions in a second step, etc. The arrow with the continuous line shows the resulting displacement vector in the present search level.

The hierarchical displacement estimator typically shrinks the search range and therefore the number of steps of the block matcher from level to level. E.g. for an extension of [3] (which uses up to 3 levels) to 6 levels of hierarchy, the maximum displacement (or search range) in the levels could be ($\pm$)63/31/15/7/3/1 pels or lines, meaning block matching with 6/5/4/3/2/1-step search, using step sizes from 32, 16, 8, 4, 2 to 1 pel or line.

| Search step | ··· | L-7 | L-6 | L-5 | L-4 | L-3 | L-2 | L-1 | L |
|---|---|---|---|---|---|---|---|---|---|
| Search positions horizontally and vertically [pel] | ··· | $\pm128$ | $\pm64$ | $\pm32$ | $\pm16$ | $\pm8$ | $\pm4$ | $\pm2$ | $\pm1$ |

Table 1: Search positions and maximum displacement in different configurations of the block matcher with log(D)-step search used in one level of the hierarchy (L = last search step)

| Number of search steps (log(D)) | 1 | 2 | 3 | 4 | 5 | 6 | 7 | 8 |
|---|---|---|---|---|---|---|---|---|
| Search positions horizontally and vertically [pel] | $\pm1$ | $\pm2$, +1 | $\pm4$, $\pm2$, +1 | $\pm8$, $\pm4$, $\pm2$, $\pm1$ | $\pm16$, $\pm8$, $\pm4$, $\pm2$, $\pm1$ | $\pm32$, $\pm16$, $\pm8$, $\pm4$, $\pm2$, $\pm1$ | $\pm64$, $\pm32$, $\pm16$, $\pm8$, $\pm4$, $\pm2$, $\pm1$ | $\pm128$, $\pm64$, $\pm32$, $\pm16$, $\pm8$, $\pm4$, $\pm2$, $\pm1$ |
| $d_{max}$ [pel] | 1 | 3 | 7 | 15 | 31 | 63 | 127 | 255 |

After this displacement vector search with integer-pel resolution (see [3]), subsequent steps of vector refinement down to half-pel, quarter-pel, eighth-pel resolution etc. can be performed. This is done always by first interpolating the image by means of one or both of the H.264 filters (6 taps for half-pel, further bilinear interpolation for further steps) or HEVC filters and then testing the eight neighbouring sub-pel positions around the match found so far.
The following components and features enhance the fundamental algorithm of [3].

*1.1 Prefiltering*

The low-pass filter type chosen in [3] for prefiltering the image signal in the levels of the hierarchy is a simple mean value filter (operating horizontally and vertically) whose window size (lpWin, same in horizontal and vertical directions) can be set for each level individually. Hierarchical motion estimation can also be done with an alternative $\cos^2$ filter of a window size that can be set, or a generalised FIR filter of a window size and filter coefficients that may be specified. For any of these filter types, the window size (and coefficients) is preferably chosen in combination with the quasi-subsampling inside the measurement window (iSub), and maybe also the spatial resolution of the vector array (iGrid) (see parameter values in Table 2).

Table 2: Major parameters of the hierarchical motion estimator with, e.g. 6 integer-pel levels of hierarchy and with sub-pel refinement.

| Parameter | Value example for 6 levels of hierarchy, integer-pel resolution | Value example for 6 levels of hierarchy + refinement to ½-, ¼- and 1/8-pel resolution |
|---|---|---|
| numHie | 6 | 9 |
| iVecAcc | 1 | 8 |
| maxVecSea (numHie) | [63 31 15 7 3 1] | [63 31 15 7 3 1 1 1] |
| iMaxVec | 63+31+15+7+3+1 = 120 | 63+31+15+7+3+1 + ½ + ¼ + 1/8 = 120.875 |
| iMeasWin (numHie) | [257 209 129 65 25 13] | [257 209 129 65 25 13 5 5] |
| lpWin(numHie) | [17 9 9 5 5 3] | [17 9 9 5 5 3 1 1] |
| iSub(numHie) | [16 8 8 4 4 2] | [16 8 8 4 4 2 1 1] |
| iGrid(numHie) | [64 32 16 8 4 2] | [64 32 16 8 4 2 1 1] |

"numHie" is the number of hierarchy levels. "iVecAcc" represents the vector accuracy (e.g. "8" = 1/8 pel and line). "maxVecSea" is the maximum length of a search vector of a corresponding level ("[63 31 15 7 3 1]", for example, represents a field of values for six levels of hierarchy) and "iMaxVec" is the maximum vector length resulting for all levels in total. "iMeasWin" is the size of the measurement window for the respective level and "lpWin" is the window size of the lowpass filter. "iSub" represents the factor of subsampling in the measurement window and "iGrid" is the grid spacing for the levels, i.e. the distance of pels or lines for which a vector is estimated.

*1.2 Optimisation Criteria*

A variety of optimisation criteria are available to find the best matching vector, either by minimising or maximising the respective cost function such as:

```
1 = sum |DFD|        = SAD              → min.

2 = sum  DFD**2 = SQD (energy)  → min.

3 = sum |DFD|    / (var.1+var.2) → min.

4 = sum  DFD**2 / (var.1+var.2) → min.

5 = sum |DFD|    / (Mab.1+Mab.2) → min.

6 = sum ||s1-m1|-|s2-m2||        → min.

7 = sum (s1-m1)*(s2-m2) (CCF)    → max.

8 = sum |s1-m1|*|s2-m2|          → max.

9 = sum  s1*s2                   → max.
```

DFD is the displaced frame difference. The sum of absolute differences (SAD) is the criterion that is most well-known and wide spread and easy to implement. The sum of squared differences (SQD) is more an energy-based criterion. SAD and SQD can be normalised to the sum of variances (3, 4) throughout the measurement windows in the reference frame and search frame, or the SAD can be normalised to the sums of mean absolute differences between the image signal and its average (mean absolute alternating component, 5). Criterion 6 minimises the sum of absolute differences of absolute alternating components, 7 maximises the cross correlation function, 8 maximises the sum of products of absolute alternating components, and 9 maximises the sum of products of image signal values.

For criteria 3...5 two vectors will be determined first: one with, the other without considering the normalisation factor (denominator) in the cost function. Subsequently the vector is selected based on comparing one of the following:

1 = the vector achieving a lower DFD or
2 = the vector more similar to the neighbouring vector(s)

(lower Euclidean distance)

*1.3 Squared-Cosine Weighting in Measurement Window*

As a strategy of giving the pixels closer to the centre pixel of the measurement window more weight, the contributions of the pixels to the cost functions (e.g. the DFDs) are weighted with a weighting function w(x,y), e.g.

$$\text{cost} = \sum_{xy} w(x, y) \cdot \left| DFD(x, y) \right| \qquad (1)$$

As an interesting approach for this distance-based weighting function the shape of a squared cosine function - i.e. $\cos^2(x) \cdot \cos^2(y)$ - can be used with the centre weight being 1, and the weight decreasing towards the boundaries of the measurement window (centre: x=y=0). Weights are symmetric in horizontal and vertical directions. The range or amplitude a of the squared cosine function can be set (0.0 ... 1.0), the boundaries of the measurement window correspond to $\pi/2$ with a weight of 1-a by which the squared cosine function is raised:

$$w(x,y) = a\cos^2(x)\cos^2(y) + 1 - a \qquad (2)$$

Of course other weighting functions can be considered that will have similar effect.

*1.4 Search Strategies*

The following search strategies are at hand:

```
1 = log(D)-step search

2 = full search
```

Full search considers every possible vector within the search range one after the other while log(D)-step search considers coarse-to-fine subsets with a denser subset with every step (see above, Fig. 2). Each subset has three by three candidate vectors. Due to the low-pass prefiltering involved in the hierarchical motion estimation and the resulting band limitation not every possible vector needs to be tested in every level or step, so the log(D)-step search matches well the concept and has proven very efficient and successful while saving computation time. Compared to [3] further hierarchy levels and search steps can be added for a wider vector search range (see above or below for parameters).

*1.5 Consideration of Preceding Vector*

The prefiltering of the image typically allows using a log(D)-step search strategy to find the optimum vector at a certain position (see above). In this case, and in contrast to full search, just a subset of the vectors possible are tested. As a safety measure and in order to facilitate spatially smoother vector fields the vector obtained at the preceding grid pixel can be included in the evaluation (except for the first pixel in the image for which a vector is determined). If it yields a better cost function value it is selected.
The operation is controlled (admitted or not) individually for every level of the hierarchy.

*1.6 Vector Initialisation per Image*

Typically motion vectors are estimated for every image independently. Starting from an initial zero vector, in every level of the hierarchy an update vector is estimated with respect to the vector estimated in the previous level. Alternatively, the vectors estimated in the previous frame (past or future) can be used as initial vectors for the hierarchical motion estimation in the present frame. In case vectors have been estimated with higher than integer-pel resolution and stored as integer numbers related to the sub-pel grid, the vectors have to be scaled according to their resolution (i.e. divided by the resolution factor, e.g. by 8 in case of 1/8-pel resolution) since the estimation in the present frame always starts with integer-pel levels. If vectors are stored as real values (float) they have to be rounded, e.g. to the nearest integer, instead.
The choice of vector initialisation can be done among the following:

1→clear the vector arrays to 0 before the first level of the hierarchy,
0→use the vectors resulting from the previous estimated frame by taking the closest integer-pel vector values. If vectors were estimated on the sub-pel grid directly (which is computationally intensive) the vectors could be used without change.

*1.7 Vector Interpolation*

With every level of the hierarchy the grid of pixels for which vectors are estimated is made denser, i.e. new locations between the previous grid points are added for which (update) vectors are estimated based on the vectors taken from the previous level. To allow this, vectors have to be interpolated for the new grid points from the surrounding ones estimated in the previous level. The method of vector interpolation can be chosen from a few alternatives such as:

1→first vertical and then horizontal interpolation (also possible: first horizontal and then vertical)
2→bilinear interpolation in 1 step, rounding towards 0

3→bilinear interpolation in 1 step, rounding to nearest integer
4→don't interpolate, but repeat "block wise", i.e. from previous grid point, vertically and then horizontally (or vice versa)

Also filters with a higher order than two in each direction could be used for vector interpolation.

*1.8 Colour Space and Colour Components*

Motion estimation can be done in different colour spaces such as RGB or YCbCr colour spaces:

0 = all colour components are considered in calculating the cost function,
1/2/3 = the first/second/third colour component only is evaluated in the cost function, e.g. Y or R,
-1 = individual vectors are estimated for the colour components independently.

The method to be preferred depends on the source of the image sequence and the application. There may be cases where estimation of individual vectors for the colour components is required or preferred. Film sequences where the colour components R, G and B have been stored on individual black-and-white films and, when stored for a long time under detrimental conditions, do not match exactly could be such a case (refer to colour plane registration).
In YCbCr video, vector estimation is often preferred based on the luminance component Y, especially where Cb and Cr have reduced spatial resolution/sampling.

*1.9 Further Hierarchical Levels and Parameter Selection*

In addition to the parameter sets for small search ranges outlined in [3], further sets of parameters for larger search ranges by up to 6 levels of hierarchy can be used. Further extension to, e.g. 7 or 8 levels or beyond is possible following the same principles, i.e. using the same or similar relation between the parameters such as filtering strength and subsampling, etc. (see Table 3).

Table 3: Major parameters of hierarchical motion estimator with up to 6 integer-pel levels of hierarchy or more, and additional stages of refinement to sub-pel resolution

| Levels of hierarchy Parameter | 2 | 3 | 4 | 5 | 6 | 7 | 8 | Additional for ½-, ¼-and 1/8-pel refinement |
|---|---|---|---|---|---|---|---|---|
| numHie | 2 | 3 | 4 | 5 | 6 | 7 | 8 | +3 |
| iVecAcc | 1 | 1 | 1 | 1 | 1 | 1 | 1 | 8 |
| maxVecSea (numHie) | [3 1] | [7 3 1] | [15 7 3 1] | [31 15 7 3 1] | [63 31 15 7 3 1] | [127 63 31 15 7 3 1] | [255 127 63 31 15 7 3 1] | [...1 1 1] |
| iMaxVec | 3+ 1 = **4** | 7+3 +1 = **11** | 15+ 7+ 3+1 **26** | 31+ 15+ 7+3 +1 = **57** | 63+3 1+ 15+7 + 3+1 **120** | 127+6 3+ 31+ 15+ 7+3 +1 = **247** | 255+1 27+ 31+15 + 7+3+1 = **502** | ... + ½ + ¼ + 1/8 |
| iMeasWin (numHie) | [3 3 13 ] | [65 33 13] | [12 9 65 33 13] | [20 9 129 65 33 13] | [257 209 129 65 25 13] | *[385 257 209 129 65 25 13]* | *[513 385 257 209 129 65 25 13]* | [... 5 5 5] |
| Pixels evaluated hor. and vert., 1+(iMeasWin-1)/iSub(numHie) | [9 7] | [17 9 7] | [17 17 9 7] | [27 17 17 9 7] | [17 27 17 17 7 7] | *[25 17 27 17 17 7 7]* | *[17 25 17 27 17 17 7 7]* | [... 5 5 5] |

(continued)

| Levels of hierarchy Parameter | 2 | 3 | 4 | 5 | 6 | 7 | 8 | Additional for ½-, ¼-and 1/8-pel refinement |
|---|---|---|---|---|---|---|---|---|
| lpWin(numHie) | [5 3] | [7 5 3] | [9 7 5 3] (or [9 5 5 3]) | [9 9 7 5 3] (or [9 9 5 5 3] | [17 9 9 5 5 3] | *[17 9 17 9 5 5 3]* | *[33 17 17 9 9 5 5 3]* | [... 1 1 1] |
| iSub(numHie) | [4 2] | [4 4 2] | [8 4 4 2] | [8 8 4 4 2] | [16 8 8 4 4 2] | *[16 16 8 8 4 2]* | *[32 16 16 8 8 4 4 2]* | [... 1 1 1] |
| iGrid(numHie) | [4 2] | [8 4 2] | [16 8 4 2] | [32 16 8 4 2] | [64 32 16 8 4 2] | [128 64 32 16 8 4 2] | [256 128 64 32 16 8 4 2] | [... 1 1 1] |

The search range maxVecSea in each level of the hierarchy is simply given by the accumulated search ranges of the log(D)-step searches involved in this level of the hierarchy (dmax in Table 1). The maximum overall displacement vector iMaxVec that can be estimated is simply the sum of the search ranges of the levels of the hierarchy.

The band limitation of the mean value filter of window size w (lpWin in Table 3) can be expressed by its -6 dB bandwidth which is roughly:

$$BW = \frac{f_{-6dB}}{f_n} \approx \frac{1}{2(w-1)}$$

The factor of subsampling in the measurement window (iSub in Table 3) has been chosen to be

$$s = \frac{1}{2BW} \approx w-1$$

as seen in Table 3 (iSub in relation to lpWin).

The grid size iGrid, i.e. the distance of pixels for which a vector is estimated in a certain level of the hierarchy using the block matcher, is decreased from level to level and is always a power of 2, ending at 2 in the last integer-pel level of the hierarchy. For pixels in between vectors are interpolated as described above. Grid size selection is also partly allowed by or linked to the low-pass filtering by the mean value filter (or other filter).

The measurement window size iMeasWin is also very roughly halved with each level of the hierarchy. A window size of M=13 in the last level combined with a quasi-subsampling factor of s=2 means that

$$N = \frac{M-1}{s}$$

or 7 by 7 pixels are evaluated in the measurement window for computing the cost function. A large measurement window size is used in the first levels of the hierarchy in order to cover a wide area of the image and thus have a more global view and obtain a rough vector estimate. The window should be large enough to cover more than only a homogeneous image area (see also section 2.1). A certain minimum window size in the last levels of the hierarchy is needed to cover sufficient local detail to achieve an accurate vector estimate. A very small window is used for sub-pel refinement.

*1.10 Sub-Pel Resolution*

In addition to the displacement vector search with integer-pel resolution as outlined in [3] subsequent steps of vector refinement down to half-pel, quarter-pel, eighth-pel, sixteenth-pel resolution etc. can be performed. This is done always by first interpolating the image by means of one or both of the H.264 filters (6 taps for half-pel, further bilinear interpolation for further steps) and then testing the eight neighbouring sub-pel positions around the match found so far. Also the HEVC filters are useful for ½-pel, ¼-pel and 1/8-pel interpolation. The coefficients, defined on the upsampled grid, are the following:

```
coe2 = [-1 0 4 0 -11 0 40 64 40 0 -11 0 4 0 -1];
```

```
coe4 = [-1 -1 0 1 4 4 0 -5 -11 -10 0 17 40 58 64 58 40 17 0
        -10 -11 -5 0 4 4 1 0 -1 -1];
```

```
coe8 = [-2 -2 -4 -4 -6 -4 -2 0 10 16 28 36 46 54 58 64 58 54
        46 36 28 16 10 0 -2 -4 -6 -4 -4 -2 -2];
```

The number of coefficients active when computing an output pixel are 7, 7...8 or 4, respectively.

Further sub-pel refinement steps may again use bilinear interpolation beyond the 1/8-pel filter.

*1.11 Displacement Estimation in Image Boundary Area*

In initial levels of the hierarchy both the motion vector search range and measurement window are large. If for any vector in the search range this window is not allowed to leave the image area, search can start (and stop) only in a line and pel of the image that are far away from the image boundary. For pixels in the boundary region the vectors estimated in the centre part are then just repeated to obtain useful vectors for motion compensation. This means: Don't estimate vectors in the image boundary area of a width so that the measurement window does not leave the image area for any displacement vector considered in this level of the hierarchy but continue the estimated ones.

Two further modes improve or allow motion estimation also in image boundary regions. First, the measurement window is allowed to touch the image boundary in the present frame while in the search frame only those vectors are included in the search for which the measurement window stays inside the image area. This means: don't estimate vectors in an image boundary area of a width so that the measurement window does not leave the image area in the present frame but continue the estimated ones.

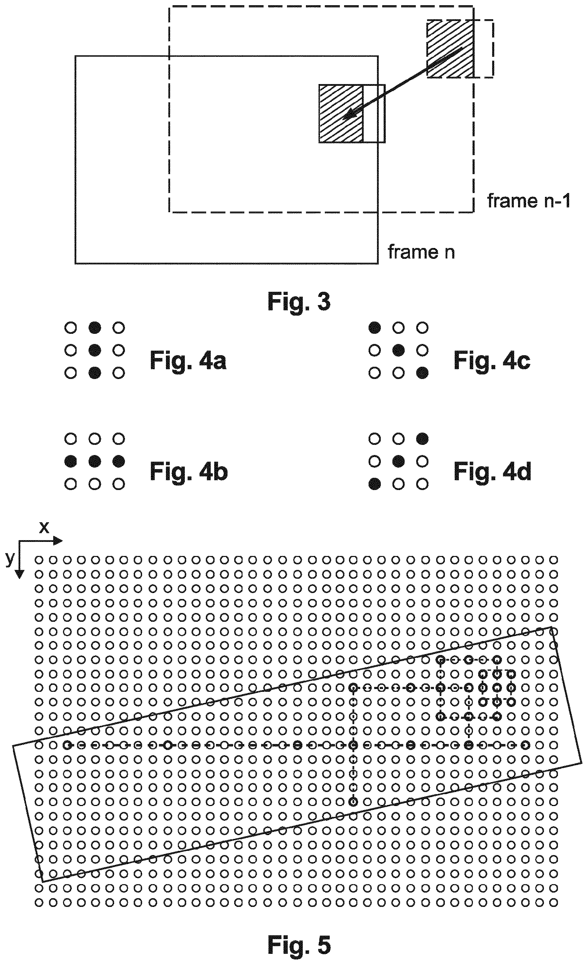

As the third mode, vectors are estimated almost everywhere. This implies that not always the complete measurement window can be evaluated to calculate the cost function (see Fig. 3). In order not to sacrifice reliability, search is limited to those vectors for which at least a certain fraction of e.g. 20% of the measurement window in the present frame or search frame stays inside the image area. The threshold value considers that in image corners at least about a quarter of the measurement window should lie inside the image.

*1.12 Tracking of Points of Interest*

Besides estimating a motion vector for every picture element in a frame, the hierarchical motion estimator has been extended to track points of interest. A number of pixels of interest are defined for a certain frame (F), and motion estimation is done starting from this frame in forward and backward directions (see Table 4).

Table 4: Forward and backward motion estimation for point-of-interest tracking

| processing sequence | frame number | | | | | | |
| --- | --- | --- | --- | --- | --- | --- | --- |
| | 1 | 2 | 3 | 4=F | 5 | 6 | 7 |
| 1. | | | S<----x | | | | |
| 2. | | S<----x | | | | | |
| 3. | S<----x | | | | | | |
| 4. | | | | x---->S | | | |
| 5. | | | | | x---->S | | |
| 6. | | | | | | x---->S | |
| etc. | | | | etc. | | | |

A match found in frame F-1 is used as a new point coordinate for finding a match in frame F-2, and so on. In case of sub-pel motion estimation, the sub-pel coordinate found in frame F-1 is rounded to the nearest integer position and the hierarchical search with respect to frame F-2 is started from there. Note that due to the measurement window, however small it may be in the final levels of the hierarchy, a match is actually found for a small part of the image - i.e. a small neighbourhood of the point of interest - rather than a single picture element.

*2. Enhanced Search Strategies for Hierarchical Motion Estimation (Invention)*

As full search considers every possible vector within the search range there may be several local optima in the resulting cost function making it difficult to identify the best, true motion vector. Log(D)-step search considers coarse-to-fine subsets with a denser subset with every step and therefore tends to continue search in the right direction - while not being able to test every possible vector. Sometimes the image signal implies ambiguity for the motion estimation in either case, especially in flat regions (e.g. blue sky) or in regions with low contrast of a certain direction such as in case of straight stripes or edges. The following search strategies have been developed to enhance motion estimation under such conditions.

*2.1 Vector Update Only in Non-Homogeneous Regions*

The displacement vector field often is inhomogeneous in flat regions. The objective is to improve consistency and get vectors closer to true motion. The hierarchical motion estimator has a significant advantage here: As the measurement window is essentially large in the initial levels of the hierarchy it is likely that it contains image information of textured or structured regions allowing a reliable vector estimate (while vector accuracy is still limited, e.g. by the pre-filtering). As the measurement window is then decreased in size along the levels of the hierarchy it is likely that at a certain level and in certain un-textured or un-structured regions the window may contain a smooth or flat image signal only that does not allow estimating a reliable update vector.
The inventive idea therefore is to update a vector obtained from a preceding level of the hierarchy only if the image signal in the measurement window now still contains structure. This is checked by computing the standard deviation of the image signal (or another measure providing energy-dependent information) in the (quasi-subsampled) measurement window and comparing it against a threshold that takes into account e.g. the amount of noise contained in the image signal (sensor noise typically). If the standard deviation exceeds this threshold (threshAllowME, e.g. in the range 0.01 ... 0.015) an update motion vector is determined. For threshAllowME=0 motion estimation is allowed everywhere. The first level of hierarchy remains unchanged, a large measurement window is used to cover structure next to flat regions. This approach yields smoother, more homogeneous motion vector fields across smooth or flat image regions while essentially maintaining subjective motion compensation quality (motion-compensated previous image viewed in comparison with present input image) if the threshold is set at a low value as appropriate. The threshold value is adapted/tailored to the specific level of the hierarchy. It can be lowered (or raised or set constant) along the levels of the hierarchy. Examples of threshAllowME values for a 6-level hierarchy: [0 0.02 0.016 0.013 0.01 0.005] or [0, 0.02, 0.016, 0.013, 0.01, 0.01] or simply [0, 0.015, 0.015, 0.015, 0.015, 0.015], all with respect to an image signal value range normalised to 0...1.
Sub-pel refinement levels remain unchanged.

*2.2 Directional Search*

Sometimes motion estimation encounters a problem: Directional structures in an image signal such as horizontal or vertical stripes imply ambiguity and may mislead the motion estimator (in one of these directions) if the measurement window is small and contains only such structures. Again, hierarchical motion estimation offers a significant advantage here: The large measurement window typically used in the first levels of the hierarchy mostly contains some high-textured regions next to these areas with directional structures which allows reliable motion estimation (though not yet most accurate) in the first levels.
The approach therefore is, from the 2nd level of the hierarchy onwards, to determine the energy, e.g. using the standard deviation, of horizontal and vertical image signal differences $\Delta s_x = s(x, y) - s(x-\Delta x, y)$ and $\Delta s_y = s(x, y) - s(x, y-\Delta y)$ in the (quasi-subsampled) measurement window.
If, e.g., the standard deviation is low and in the range of the image signal noise in one direction (and large in the other), the vector component will be frozen in this direction and left unchanged, while continuing hierarchical motion estimation only in the other direction of large(r) standard deviation:

If $\sigma_{\Delta x} < thr_\sigma$ and $\sigma_{\Delta y} > fac_\sigma \, \sigma_{\Delta x}$ then restrict further search to y direction (see Fig. 4a),
else if $\sigma_{\Delta y} < thr_\sigma$ and $\sigma_{\Delta x} > fac_\sigma \, \sigma_{\Delta y}$ then restrict further search to x direction (see Fig. 4b).

E.g. with $thr_\sigma = 4/255$ (or 3), $fac_\sigma = 2$ (or 3), or tailored specific to the levels.

This means that in any step of the log(D)-step search in one level of the hierarchy, out of the 3 by 3 possible search positions or update vectors only the black positions depicted in the little diagrams will be evaluated while ignoring the white ones.

The underlying assumption again is that in the previous level of the hierarchy the now frozen vector component has been determined with a higher reliability due to the larger measurement window.

The approach can be carried further to include also diagonal directions. Again from the 2nd level of the hierarchy onwards, also the energy, e.g. using the standard deviation, of diagonal image signal differences $\Delta s_u = s(x,y) - s(x-\Delta x, y-\Delta y)$ and $\Delta s_d = s(x,y) - s(x-\Delta x, y+\Delta y)$ in the (quasi-subsampled) measurement window is determined (u = upward diagonal, d = downward diagonal).

If, e.g., the standard deviation is low and in the range of the image signal noise in one direction (and large in the other), the vector component will be frozen in this direction and left unchanged, while continuing hierarchical motion estimation only in the other direction of large(r) standard deviation:

... (see above)

else if $\sigma_{\Delta u} < thr_\sigma$ and $\sigma_{\Delta d} > fac_\sigma \, \sigma_{\Delta u}$ then restrict further search to downward diagonal direction (see Fig. 4c),

else if $\sigma_{\Delta d} < thr_\sigma$ and $\sigma_{\Delta u} > fac_\sigma \, \sigma_{\Delta d}$ then restrict further search to upward diagonal direction (see Fig. 4d).

The approach can be carried even further to include also gently or steep diagonal directions. Again from the 2nd level of the hierarchy onwards, also the energy, e.g. using the standard deviation, of gently or any diagonal image signal differences $\Delta s_u = s(x,y) - s(x-n\cdot\Delta x, y-m\cdot\Delta y)$ and $\Delta s_d = s(x,y) - s(x-m\cdot\Delta x, y+n\cdot\Delta y)$ in the (quasi-subsampled) measurement window is determined (u = upward diagonal, d = downward diagonal). The parameters n, m control the direction of structure looked at, e.g. n=1, m=2 or n=2, m=1 or n=2, m=3 etc. A similar threshold comparison is done like above, including using an adapted threshold considering the spatial distance of the pixels. The further search direction of log(D)-step search in its search step(s) is selected in the same way as above now using n, m to determine the direction. In the example in Fig. 5, the log(D)-step search positions depicted in bold could be allowed.

In the example of Fig. 5 three search positions of the first level are connected with a dashed line, two search positions of the second level are connected with a continuous line and the search positions of the lower levels are connected by dotted lines. A rectangle roughly demonstrates a band region where the search is performed. The restriction of search positions depends on the direction of local structures in the image signal. In the case of Fig. 5 the direction corresponds to about n=1, m=6.

*2.3 Enhanced Neighbour Vector Search*

The log(D)-step search does not test every possible vector within the maximum search range. Especially near the boundaries of objects with different motion - also due to the extension of the measurement window across an object boundary - the vector found at a certain grid pixel might not be optimal, a vector found at another grid pixel nearby could even provide a better vector. Therefore, after vector search has been carried out in a level of the hierarchy, a neighbour vector search step is added before proceeding with the next level of the hierarchy.

A simple method of neighbour vector search consists in comparing the estimated vector of a grid pixel with the vectors of its immediate neighbouring grid pixels based on the cost function, i.e. in a 3-by-3 neighbourhood: where a better match is thus found the vector is updated with this neighbour vector by storing it in place, so that it is immediately used in subsequent neighbourhood comparisons at the next grid pixels. This recursive method may be either used in all levels of the hierarchy or only e.g. in the 3rd of 6 levels.

Regarding the estimated displacement vector field it has been found that in some parts of the image the vector field may "extend" around moving objects (vector field "halo"), i.e. foreground object motion is assigned to the background object. On the other hand it may happen that the motion of the background is assigned to the foreground object (kind of an "inside halo"). As another observation, sometimes the vector field may not follow the direction of the object boundary, e.g. instead of following a slowly rising line it extends straight horizontally.

An objective of the enhanced neighbour vector search is therefore to get the displacement vector field closer to the shape of the moving foreground objects. The method is extended from in-place processing to a regular processing, i.e. not in place. Again this is done in every level of the hierarchy (or in just some of them). Moreover, the neighbourhood is enlarged from 1 to 2, 3, 4 and beyond - i.e. from a neighbourhood of 3x3 to 5x5, 7x7, 9x9 and beyond, while establishing means of speeding up the processing. Computing and comparing the cost function for 9x9 alternative vectors as an example - and finally doing so for every pixel - needs plenty of processing time. The following approach of accelerating the processing is therefore provided with the idea of testing every new vector value only once: At every grid pixel, first a 2D storage array is allocated for flagging vectors that have been tested - the array being of the same size as the maximum range of motion vectors (search range) - and initialised with zeros everywhere. Then the vectors estimated for the grid pixels in the 9-by-9 neighbourhood (as an example) are taken from the vector memory and, one after the other, checked whether the vector has been flagged as tested already. If this is not the case, the cost function is computed for this vector, compared with the cost of the optimum vector so far. In case of better cost it is chosen as the new optimum vector. Anyway it is flagged in the 2D array as tested. Then processing continues at the next grid pixel where the same method is applied again.

By flagging tested vectors in the 2D array it is avoided that the cost function is computed and compared for another neighbouring grid pixel that carries the same vector. Typically most of the vectors in the neighbourhood are the same, so this approach saves a lot of processing time (e.g. 90% for the neighbour vector comparison step, and more than 50% overall, thus affording to use this large neighbourhood.

*2.4 Getting Vector Field Closer to Moving Objects - Further, Final Integer-pel Search Level to the Hierarchy*

A general observation so far is that the motion vector field is often not close to the shape of moving objects, i.e. it does not change its direction and strength of motion exactly at object boundaries but a few pixels in outside or inside direction. This may depend on where the higher amount of structure is found and on the size of the measurement window. A few methods have been introduced which already help to get the vector field closer to moving objects, especially: performing segmentation and using the segmentation information in motion estimation, and enhanced neighbour vector search. As an additional method a further, final integer-pel search level is added to the hierarchy with a smaller measurement window of 7x7 and its vector grid size being the pixel grid. This would extend e.g. a 6-level hierarchy to this 7-level hierarchy:

Low-pass filter window size: [17 9 9 5 5 3 3]
Vector array grid size: [64 32 16 8 4 2 1]
Search range (+/-): [63 31 15 7 3 1 1]
Measurement window size: [257 209 129 65 25 13 7]
Factor of subsampling inside measurement window: [16 8 8 4 4 2 1]

A little amount of prefiltering is still kept. Subsequent sub-pel levels remain unchanged. Sub-pel levels - with the window being even smaller, 5x5 - may now help even more to bring the vector field still closer to moving objects.

*3. Results*

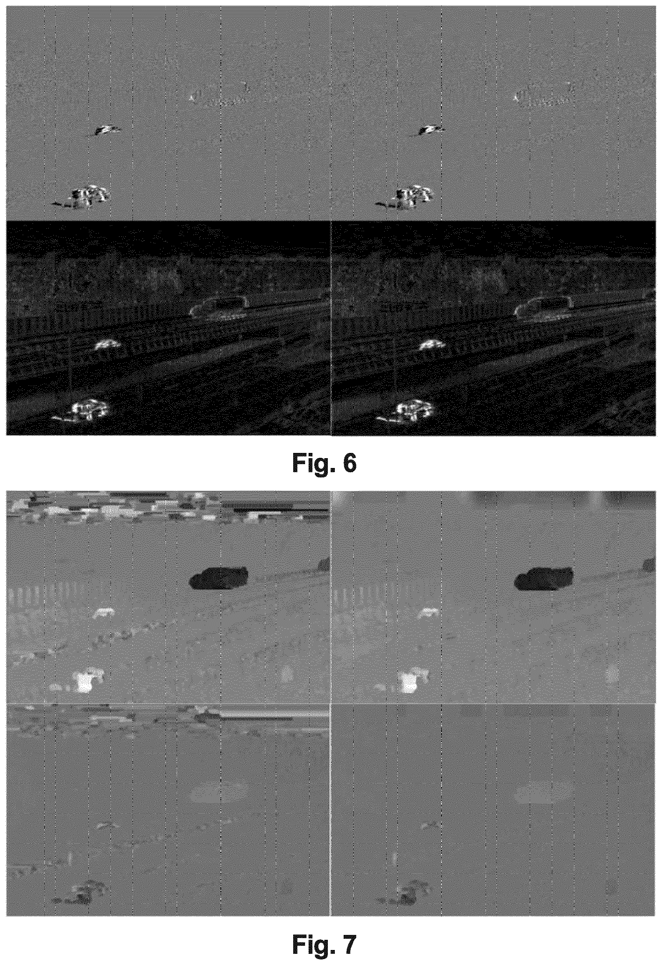

*3.1 Vector Update Only in Non-Homogeneous Regions* The feature of allowing a vector update in a certain level of the hierarchy with respect to the previous level only in non-homogeneous regions typically has negligible influence on the quality of the motion-compensated image while yielding a more homogeneous displacement vector field as intended. Fig. 6 shows the displaced frame differences (DFD; top; neutral grey means zero), i.e. the differences between the original image and the motion-compensated image, as well as the cost function (bottom; black means zero) for a section of an image of the HD test sequence "GlobalMotion" (example of 6 integer-pel levels of hierarchy plus sub-pel refinement down to 1/8 pel, parameter threshAllowME = 0.015 with respect to an image signal range of 0...1). On the left side of Fig. 6 the vector update is performed everywhere, whereas on the right side a vector update is performed only in non-homogeneous regions. A partial measurement window is used at image boundaries. As intended, there is hardly any difference between permitting a vector update only in non-homogeneous regions and allowing a vector update everywhere.

In addition, Fig. 7 shows the horizontal and vertical components of the estimated displacement vectors for the same image (luminance-coded representation, neutral grey means zero). A horizontal displacement vector image is shown at the top and a vertical displacement vector image at the bottom. On the left side of Fig. 7 vector update is performed everywhere, whereas on the right side a vector update is only performed in non-homogeneous regions with threshAllowME=0.015 (6 integer-pel levels of hierarchy plus sub-pel refinement down to 1/8 pel). A partial measurement window is used at image boundaries. Medium grey represents zero displacement, darker grey represents negative displacements and lighter grey represents positive displacements.

When allowing a vector update everywhere the vector field is pretty inhomogeneous in the flat sky region at the top of the image as seen in both the horizontal and vertical vector components. However, when permitting a vector update only in non-homogeneous regions the vector field is now pretty homogeneous in the flat sky region as intended. This means that the estimated vectors are now closer to the true motion in the sequence.

*3.2 Directional Search*

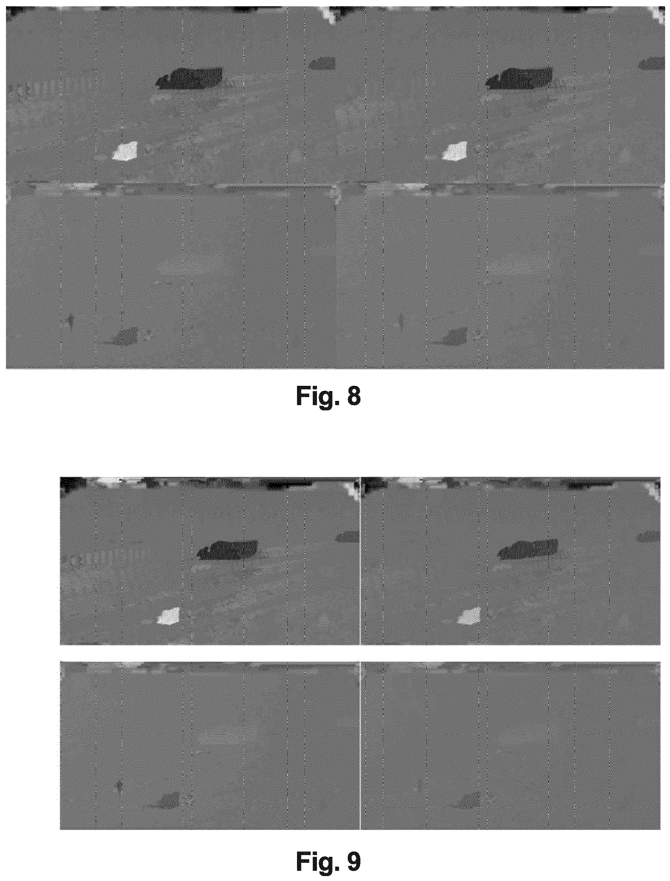

Like the feature of vector updating only in non-homogeneous regions, the directional search feature has been designed to yield a more homogeneous displacement vector field closer to the true motion, while maintaining the quality of the motion-compensated images. The directional search feature provides improvement in areas of structures in an image that have a certain direction like in the fence segments containing horizontal green boards between vertical red posts in the "GlobalMotion" sequence. As Fig. 8 shows, the vector field is more homogeneous using directional search especially in the first nine fence segments from the left which apparently are wide enough (compared with the measurement window size). In Fig. 8 the horizontal displacement vector image is shown at the top and the vertical displacement vector image at the bottom after 6 integer-pel levels of hierarchy without (left) and with (right) using directional search. Medium grey represents zero displacement, dark grey represents negative displacement and light grey positive displacement. Also in the dark region below the highway and in the grey road before it the vector field is more homogeneous and closer to the true motion.

There is almost no visible difference in the motion-compensated image (which might be compensated further by sub-pel refinement), and there are only slightly higher DFDs in the DFD image in these areas.

*3.3 Enhanced Neighbour Vector Search*

Enhanced neighbour vector search with regular rather than in-place processing and with a 9x9 neighbourhood has been found to provide the best overall performance for the "GlobalMotion" sequence. Improvement is achieved in the vector field as well as the DFD and motion-compensated images, especially in the fence and in the uncovered background behind the truck; also the middle crash barrier looks pretty good already (see Fig. 9, Fig. 10, Fig. 11 for a comparison). The vector field now nicely follows the line between wheel area of the truck and crash barrier or road, and follows better the upper edge of the truck's load container (see Fig. 9).

In Fig. 9 the horizontal displacement vector image is shown at the top and the vertical displacement vector image at the bottom after 6 integer-pel levels of hierarchy with neighbour vector search in a 3-by-3 neighbourhood and in-place processing (left) and with enhanced neighbour vector search in a 9-by-9 neighbourhood and regular, not-in-place accelerated processing (right). The medium grey represents zero displacement, dark grey represents negative displacement and light grey represents positive displacement. The vector fields may be colour-coded and overlayed on the original image in order to better illustrate the results.

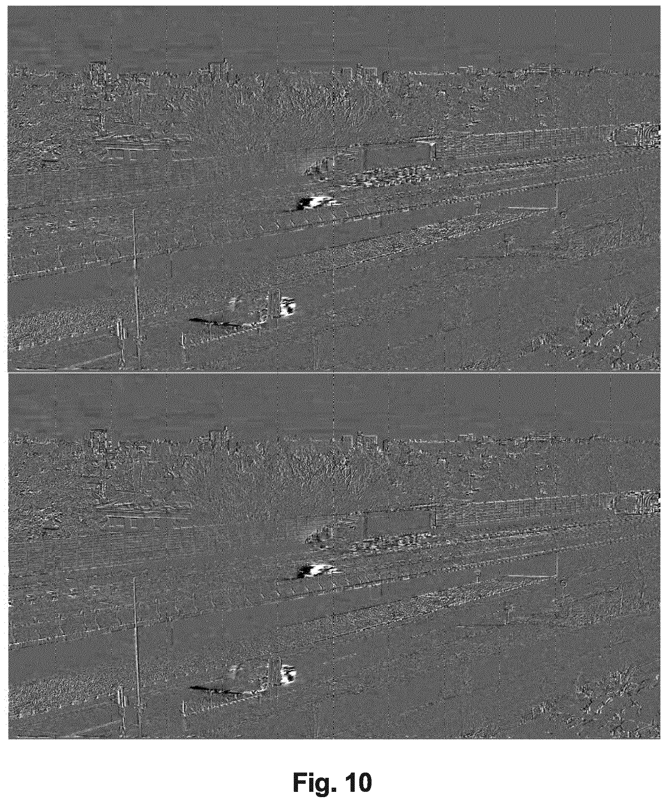

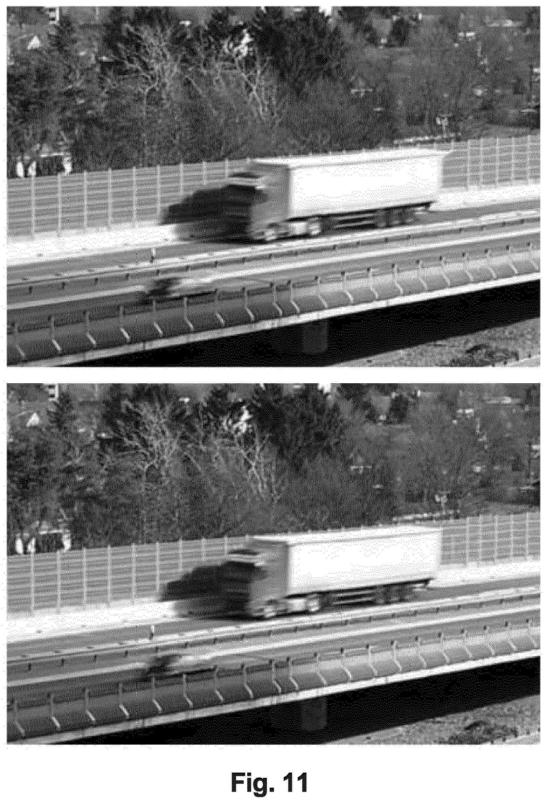

The DFD's are significantly lower in the wheel area and crash barrier as well as the uncovered background behind the truck (see Fig. 10) and the motion-compensated image is enhanced in the same manner (see Fig. 11). Fig. 10 shows DFD images (DFDx4) of the same HD sequence after 6 integer-pel levels of hierarchy with neighbour vector search in a 3-by-3-neighbourhood and in-place processing (top) and with enhanced neighbour vector search in a 9-by-9 neighbourhood and regular, not-in-place accelerated processing (bottom).

Furthermore, Fig. 11 shows motion-compensated images of the HD sequence after 6 integer-pel levels of hierarchy with neighbour vector search in a 3-by-3 neighbourhood and in-place processing (top) and with enhanced neighbour vector search in a 9-by-9 neighbourhood and regular, not-in-place accelerated processing (bottom). In this example also the luminance PSNR has been increased due to a gain achieved especially near the boundaries of moving objects. As can be seen in the top image of Fig. 11 there are artefacts at the end of the truck. Specifically, a post in the fence behind the truck is missing. Additionally, vertical rods in the crash barrier directly below the wheels of the truck are displaced or eliminated. These artefacts are strongly reduced if enhanced neighbour vector search in a 9-by-9-neighbourhood is performed (see bottom image).

As a conclusion, the enhanced neighbour vector search makes the displacement vector field more homogeneous and brings it closer to the shapes of moving objects. Regular rather than in-place processing is preferred for neighbour vector search, and using a neighbourhood of 4 in all directions, i.e. 9x9 grid pixels, is recommended.

*3.4 Getting Vector Field Closer to Moving Objects - Further, Final Integer-pel Search Level to the Hierarchy*

With the objective of getting the vector field even closer to the shape of moving objects, as an additional method a further, final integer-pel search level has been added to the hierarchy with a smaller measurement window of 7x7 and its vector grid size being the pixel grid. A little amount of prefiltering is still kept (low-pass filter window size: 3x3). The search range is +/-1, and the factor of subsampling inside measurement window is 1, i.e. there is no subsampling finally. Subsequent sub-pel levels will remain unchanged.

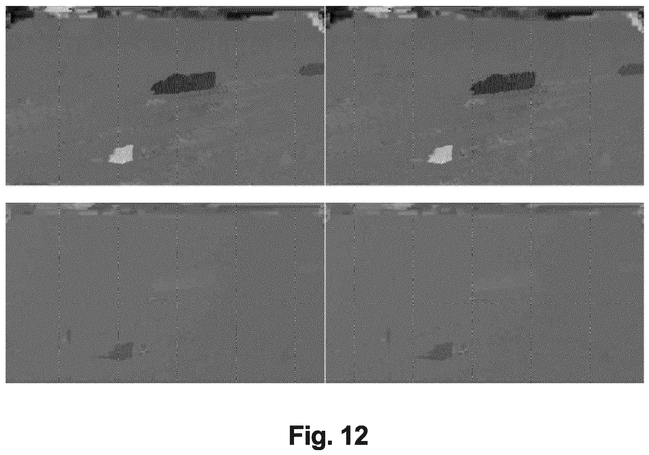

Results for the "GlobalMotion" sequence using this 7th search level compared to 6 levels is shown in the following. Fig. 12 shows a horizontal displacement vector image at the top and a vertical displacement vector image at the bottom after 6 (left) and 7 (right) integer-pel levels of hierarchy. The medium grey represents zero displacement, dark grey represents negative displacement and light grey represents positive displacement. The vector field is now already pretty near the truck, although it is a little bit lacerated and slightly less homogeneous.

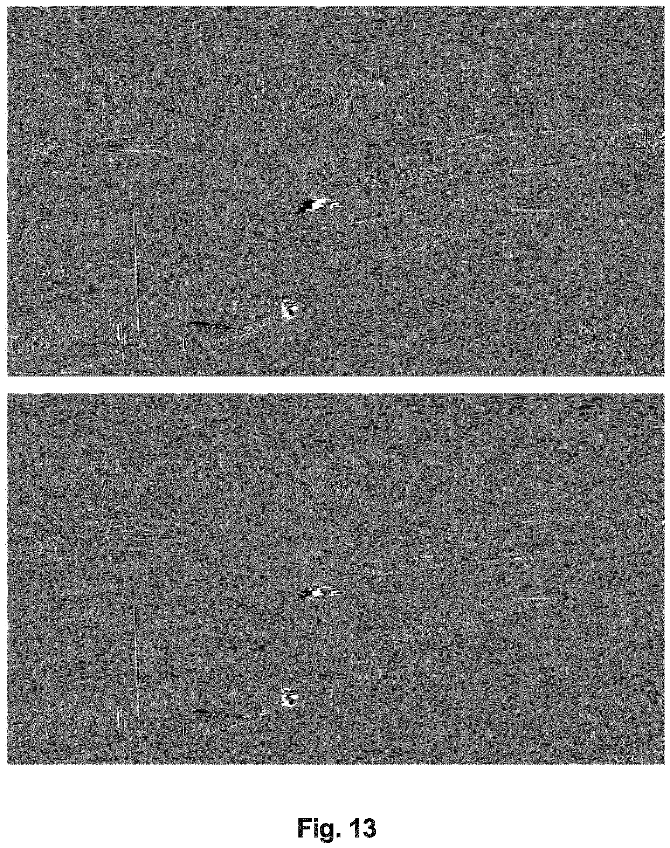

Fig. 13 shows DFD images (DFDx4) of the HD sequence after 6 (top) and 7 (bottom) integer-pel levels of hierarchy. The DFD image is better in the fence, the SUV/off-road vehicle, the right and middle trucks (shadow, uncovered background, wheel area!), the middle crash barrier and also partly in buildings and trees.

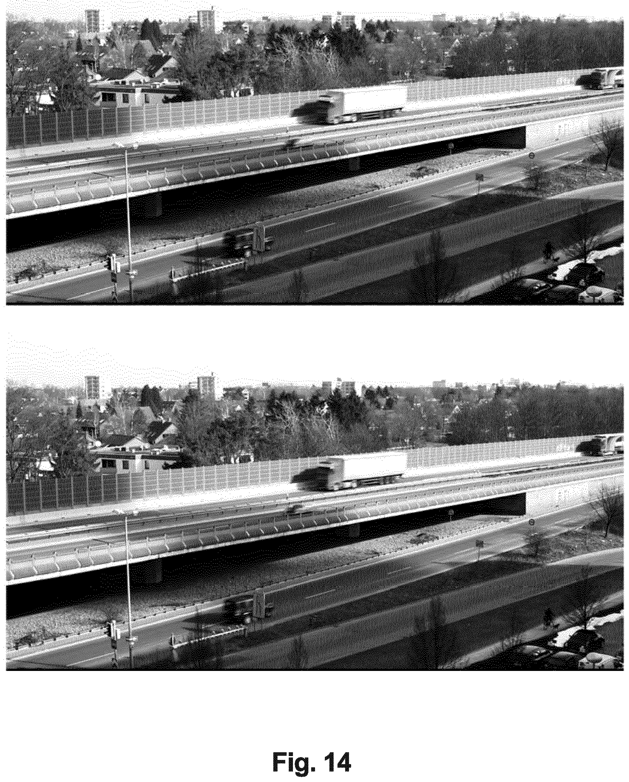

Fig. 14 shows motion-compensated images of the HD sequence after 6 (top) and 7 (bottom) integer-pel levels of hierarchy. The motion-compensated image is even better now, e.g. in the middle crash barrier under the truck (and pretty good already) and in the uncovered background behind the truck (this will be even better with bidirectional motion estimation/motion compensation), and the barrier at the bottom left with the little lamps is now good, too.

In conclusion the use of a further integer-pel search level with a grid size of 1 and a smaller measurement window (7x7 in this case) is recommended for good quality of the motion-compensated image.

The invention covers motion estimation in general and is therefore applicable to many applications requiring motion estimation and/or object or point tracking, including applications of Targeted Content. Some of its components might be used also in combination with other fundamental methods of motion estimation.

References

[1] US 6560371 B1

[2] US 2014/0286433 A1

[3] Matthias Bierling, "Displacement Estimation by Hierarchical Blockmatching", Proc. of 3rd SPIE Symposium on Visual Communications and Image Processing, Cambridge, USA, November 1988; SPIE, vol.1001 Visual Communications and Image Processing, pp.942-951

[4] DE 4007851 A1

**Claims**

1. Method for estimating motion between successive frames by:

   - estimating a first motion vector (v1) by using a first measurement window (mw) and a first search range in a first level of hierarchy and
   - using a second measurement window and a second search range in a second level of hierarchy for estimating an update or refinement of the first motion vector (v), the second measurement window being smaller than the first measurement window and/or the second search range being smaller than the first search range,

   **characterized by**:

   - providing an energy dependent value for the second measurement window,
   - comparing the energy dependent value with a threshold value,
   - determining as resultant motion vector:

     -- either the sum of the first motion vector (v1) and a second motion vector (v2) estimated by using the second measurement window, if the energy dependent value exceeds the threshold value,
     -- or the first motion vector (v1), if the energy dependent value does not exceed the threshold value.

2. Method according to claim 1, wherein the method is performed separately for horizontal direction of motion and vertical direction of motion.

3. Method according to claim 1, wherein estimating the first and/or the second motion vector (v1, v2) is mainly performed in a predefined direction in the frames.

4. Method according to one of the preceding claims, wherein estimating the first and/or the second motion vector (v1, v2) is performed by a log(D)-step search, where D is the sum of 1 plus the maximum displacement within the search range.

5. Method according to one of the preceding claims, wherein as the energy dependent value the energy of the image signal differences in the respective measurement window in horizontal, vertical, diagonal or other direction is determined, and if the energy in said direction is lower than the energy in the orthogonal direction by a first predefined value or lower than a second predefined value, the corresponding vector component of the first motion vector in said direction is left unchanged , while continuing motion estimation in another direction of larger energy.

6. Method according to one of the preceding claims, wherein the threshold value is altered depending on the level of hierarchy.

7. Method according to one of the preceding claims, wherein the resultant motion vector is determined for a pixel, a first value of a cost function is calculated for the pixel by applying the resultant motion vector, a second value of the cost function is calculated for the pixel by applying a predetermined motion vector of a neighbour pixel and a final motion vector for the pixel is determined by assigning the resultant motion vector to the final motion vector if the first value of the cost function is smaller than the second value, and otherwise, when the first value of the cost function is higher than the second value, the motion vector of the neighbour pixel is assigned to the final motion vector of the pixel.

8. Method according to one of the preceding claims, wherein the method is repeated for every successive level of hierarchy and the number of levels of hierarchy is equal to or higher than three.

9. Method according to one of the preceding claims, wherein in a lowest level of hierarchy the size of the measurement window is 5x5 or 7x7 and a vector grid size is the pixel grid size.

10. Method according to one of the preceding claims, wherein in each level a spatial prefiltering is performed by an FIR filter such as a mean value filter, the bandwidth of which is $1/(2(w-1))$ and a factor of subsampling in the respective measurement window is w-1, where w is the window size of the filter.

11. Device for estimating motion between successive frames including:

- estimating means for estimating a first motion vector (v1) by using a first measurement window (mw) and a first search range in a first level of hierarchy, and for estimating an update or refinement of the first motion vector (v1) by using a second measurement window and a second search range for a second level of hierarchy, the second measurement window being smaller than the first measurement window and/or the second search range being smaller than the first search range, **characterized by**:
- measurement means for providing an energy dependent value for the second measurement window and
- comparing means for comparing the energy dependent value with a threshold, wherein
- the calculating means is designed for determining as resultant motion vector:

-- either the sum of the first motion vector (v1) and a second motion vector (v2) estimated by the estimating means using the second measurement window, if the energy dependent value exceeds the threshold,
-- or the first motion vector (v1), if the energy dependent value does not exceed the threshold.

EP 3 177 016 A2

**Fig. 1**

**Fig. 2**

**Fig. 3**

**Fig. 4a**

**Fig. 4c**

**Fig. 4b**

**Fig. 4d**

**Fig. 5**

Fig. 6

Fig. 7

Fig. 8

Fig. 9

Fig. 10

Fig. 11

Fig. 12

Fig. 13

**Fig. 14**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6560371 B1
- US 20140286433 A1

- DE 4007851 A1

**Non-patent literature cited in the description**

- Displacement Estimation by Hierarchical Block-matching. **MATTHIAS BIERLING.** Proc. of 3rd SPIE Symposium on Visual Communications and Image Processing. SPIE, November 1988, vol. 1001, 942-951